# EUROPEAN PATENT SPECIFICATION

(11) **EP 2 309 901 B1**
(45) Date of publication and mention of the grant of the patent: **22.08.2012**
(21) Application number: 08761365.9
(22) Date of filing: 25.06.2008
(51) Int. Cl.: A47J 31/44

(54) **DEVICE FOR HEATING AND/OR FROTHING MILK FOR MACHINES FOR PREPARING HOT BEVERAGES SUCH AS A CAPPUCCINO**
VORRICHTUNG ZUM ERHITZEN UND/ODER AUFSCHÄUMEN VON MILCH FÜR MASCHINEN ZUR ZUBEREITUNG VON HEISSGETRÄNKEN WIE CAPPUCCINO
DISPOSITIF POUR CHAUFFER ET/OU FAIRE MOUSSER DU LAIT POUR DES MACHINES DE PRÉPARATION DE BOISSONS CHAUDES TELLES QUE DES CAPPUCCINO

(43) Date of publication of application: 20.04.2011
(73) Proprietor: Swiss Caffe Asia Ltd, Hong Kong (HK)
(72) Inventor: CHENG, Rocky, Hong Kong (CN)
(74) Representative: Modiano, Micaela Nadia
(86) International application number: PCT/EP2008/058083
(87) International publication number: WO 2009/155972

(56) References cited:
- EP-A- 0 344 859
- WO-A-2005/032316
- WO-A-2005/102126
- DE-A1-102005 010 599

## Description

### Technical field

The present invention relates to a device for heating and/or frothing milk to prepare hot beverages such as a cappuccino.

### Background art

It is known that coffee making machines are provided with a device for dispensing steam at high temperature, by means of which milk is heated and/or frothed in order to prepare hot beverages, such as for example a cappuccino or a warm milk.

In the jargon of the field, this device is known as frother.

Known frothers comprise a tubular element in which the inlet end is associated with a source of steam at high temperature, and the outlet end is provided with a nozzle for dispensing the steam.

Moreover, known frothers comprise a tap for blocking and adjusting the flow of steam, which is provided with an actuation knob.

In use, an operator manually arranges the tubular element inside a container, such as a cup, jug or the like, which contains cold milk, and places the nozzle below or at the free surface of the milk, depending on whether he wishes to heat it or also froth it, i.e., produce a surface layer of foam.

The operator then opens the tap and adjusts it according to his own sensibility in order to obtain in output from the nozzle a flow of steam which is suitable for the situation. In particular, in order to obtain frothed milk, the operator opens and closes the tap repeatedly as he simultaneously moves the container of the milk toward and away from the nozzle, so that the flow of steam incorporates air to form the foam.

These known frothers, however, suffer drawbacks, among which it is necessary to note that the production of warm milk or frothed milk depends on the sensibility and experience that the operator has in arranging the nozzle at the correct level and in adjusting the degree of opening of the tap.

Another drawback of known frothers consists in that they work with the tubular element arranged vertically or at most obliquely, and this forces design and manufacturing constraints of the machines to which they are applied.

Another drawback of known frothers consists in that residues of milk and dirt accumulate on the outer surface of the tubular element and of the nozzle and must be removed manually with the aid of sponges and washing liquids. However, these operations do not ensure a high and safe degree of hygiene, so that harmful bacterial colonies can grow from the residues of milk and dirt.

DE 10 2005 010599 discloses a device for heating and/or frothing milk, with a single tube for the supply of air and milk.

EP 0 344 859 discloses a device for frothing and heating milk for beverages, wherein the air is sucked at the output, after the milk and vapor are mixed.

The aim of the present invention is to devise a device for heating and/or frothing milk for machines for preparing hot beverages such as a cappuccino, whose operation is regular, constant and independent of the sensibility and experience of an operator, thus allowing to obtain milk which is warmed and/or frothed to a preset degree.

An object of the present invention is to devise a device for heating and/or frothing milk which is versatile and flexible in use and can be installed easily on any machine for making hot beverages without requiring particular modifications or interventions for adaptation.

Still another object of the present invention is to provide a device for heating and/or frothing milk which can be cleaned easily so as to ensure a high degree of hygiene.

Within this aim, another object of the present invention is to provide a device which is simple, relatively easy to provide in practice, safe in use, effective in operation, and relatively low in cost.

This aim and these and other objects are all achieved by the present device for heating and/or frothing milk for machines for preparing hot beverages such as cappuccino, as defined in claim 1.

In a preferred embodiment, the device according to the invention also comprises an ambient air supply duct, which has an intake port adapted to be connected to the outside environment and a port for introducing the air in the mixing chamber, the air being drawn into the mixing chamber due to the partial vacuum created by the flow of steam between the converging portion and the diverging portion of the Venturi tube.

In another preferred embodiment, the device according to the invention comprises a tap which is associated with the air supply duct for opening and closing the air intake port.

Further characteristics and advantages of the present invention will become better apparent from the detailed description of a preferred but not exclusive embodiment of a device for heating and/or frothing milk for machines for making hot beverages such as cappuccino, according to the invention, illustrated by way of non-limiting example in the accompanying drawings, wherein:

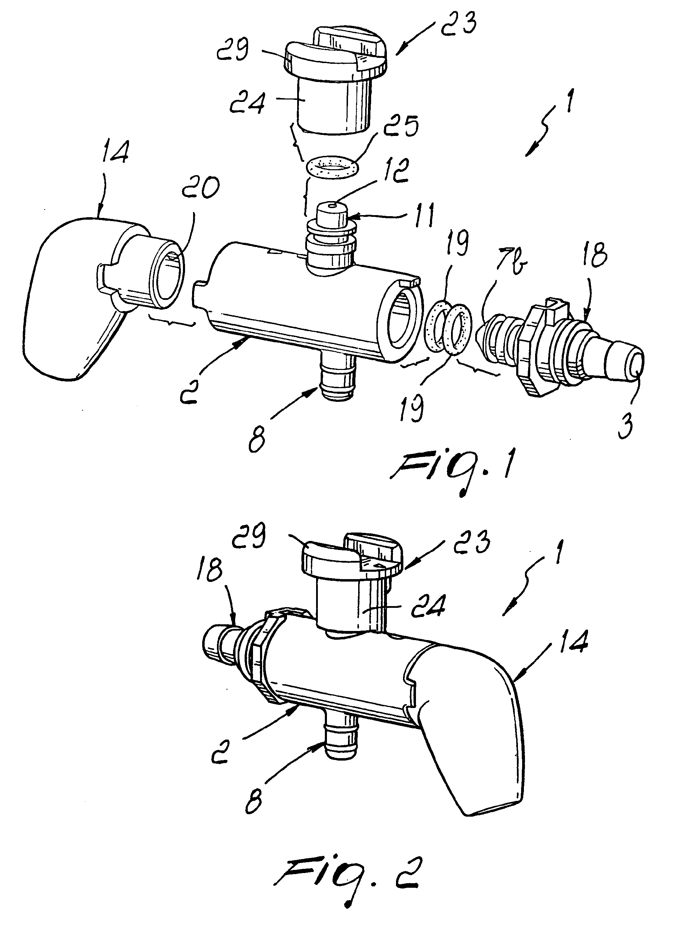

Figure 1 is an exploded perspective view of the device according to the invention;
Figure 2 is a general perspective view of the device according to the invention;

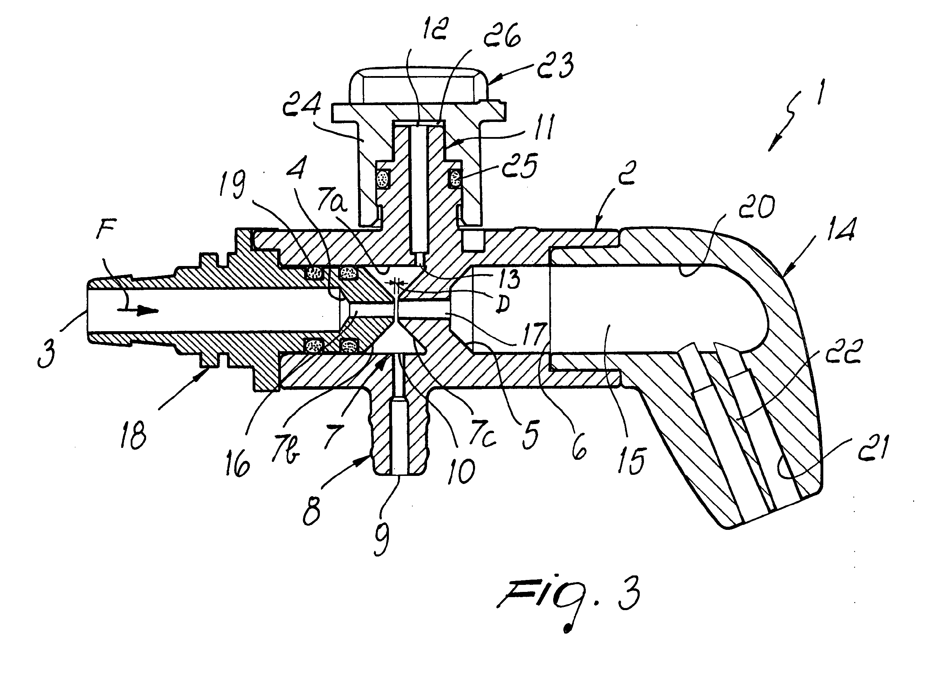

Figure 3 is a sectional view of the device according to the invention, taken along the central longitudinal plane;
Figure 4 is an enlarged-scale view of the air supply duct of the device according to the invention with the tap in the open configuration;
Figure 5 is a sectional view, taken along a plane which is perpendicular to the longitudinal axis of the air supply duct;
Figure 6 is a sectional view, taken along the line VI-VI of Figure 5;
Figures 7, 8 and 9 correspond to Figures 4, 5 and 6, but with the tap in the closed configuration.

### Ways of carrying out the invention

With reference to the figures, the reference numeral 1 generally designates a device for heating and/or frothing milk for machines for preparing hot beverages such as cappuccino.

In the present description, the term "substantially" is used with a meaning of "correspondence" within tolerances which are known to the person skilled in the art.

The device 1 comprises a tubular body 2, inside which a Venturi tube is provided which comprises an intake end 3, a converging portion 4, a diverging portion 5 and a discharge end 6.

The intake end 3 can be associated with a source of steam, such as for example a boiler, a pressurized boiler, an instant heat exchanger (Thermoblock).

The flow of steam passes through the Venturi tube along the direction indicated by the arrow F.

Between the converging portion 4 and the diverging portion 5 there is a chamber 7 for mixing the milk with the steam and optionally with air drawn from outside.

The device 1 further comprises at least one milk supply duct 8, which has a drawing port 9 which can be associated with a milk reservoir, not shown, and a milk input port 10, which leads into the mixing chamber 7.

The milk is drawn from the reservoir into the mixing chamber 7 due to the partial vacuum created by the acceleration of the flow of steam between the converging portion 4 and the diverging portion 5.

Moreover, the device 1 comprises at least one duct 11 for supplying air from the outside environment, which has an intake port 12 adapted to be connected to the outside environment and an air input port 13 which leads into the mixing chamber 7.

In this case also, the air is drawn from the outside into the mixing chamber 7 due to the partial vacuum created by the acceleration of the flow of steam between the converging portion 4 and the diverging portion 5.

A dispenser 14 for the milk heated and/or frothed in the mixing chamber 7 is associated with the end of the tubular body 2 at which the discharge end 6 of the Venturi tube leads out.

A chamber 15 for compacting the heated and/or frothed milk that exits from the mixing chamber 7 is defined between the diverging portion 5 and the dispenser 14.

The milk supply duct 8 and the air supply duct 11 are connected to the tubular body 2 and are arranged substantially perpendicular to the longitudinal axis of the Venturi tube and are mutually offset with respect to the direction of the flow of steam.

In particular, the milk input port 10 is offset backwardly with respect to the air input port 13.

The mixing chamber 7 is defined by a cylindrical portion 7a, which is formed inside the tubular body 2 and is hollow and coaxial with respect to the Venturi tube, and by two surfaces 7b and 7c which are substantially frustum-shaped and face each other, so as to be opposite one another, within the cylindrical portion 7a.

The two frustum-shaped surfaces 7b and 7c are arranged substantially coaxially to the cylindrical portion 7a and their respective smaller end faces are mutually juxtaposed and adjacent at a preset distance D.

The milk input port 10 and the air input port 13 are provided at the lateral surface of the cylindrical portion 7a.

The smaller end faces of the two mutually juxtaposed frustum-shaped surfaces 7b and 7c define the region at which the aspirated milk and air meet.

The annular volume that lies at the peripheral portion of such region defines the space within which, due to turbulent motions, the milk is frothed by the air, forming foam.

The Venturi tube comprises a first tubular portion 16, which connects the converging portion 4 to the mixing chamber 7, and a second tubular portion 17, which connects the mixing chamber 7 to the diverging portion 5.

The first tubular portion 16 and the second tubular portion 17 are substantially coaxial, and the first portion has a smaller inside diameter than the second portion.

The discharge end of the first tubular portion 16 and the intake end of the second tubular portion 17 are provided at the smaller end faces of the two frustum-shaped surfaces 7b and 7c which are mutually juxtaposed.

In the embodiment shown in the accompanying figures, the intake end 3, the converging portion 4 and the first tubular portion 16 of the Venturi tube are provided in a nozzle 18.

The nozzle 18 has an end which is inserted detachably within the tubular body 2 with the interposition of sealing rings 19 and an opposite end which protrudes from the tubular body 2 and is provided with means for coupling or engagement with a machine for preparing hot beverages.

The end of the nozzle 18 that is inserted within the tubular body 2 is frustum-shaped, so as to define the frustum-shaped surface 7b.

The other frustum-shaped surface 7c is instead defined on one face of a partition which is formed within the tubular body 2 and is crossed by the second tubular portion 17.

The diverging portion 5 is provided on the opposite face of such partition.

The dispenser 14 is associated detachably with the tubular body 2 and comprises an internal cavity 20 which defines, in association with the tubular body 2, the compaction chamber 15 and is connected to a channel 21 for the outflow of the warmed and/or frothed milk.

The outflow channel 21 is crossed by at least one longitudinal fin 22, which improves the flow of milk in output, contributing to give a "cream" effect to the frothed milk.

Both the nozzle 18 and the dispenser 14 are coupled to the tubular body 2 by interlocking coupling or other temporary couplings which are known to the person skilled in the art. In particular, both the nozzle 18 and the dispenser 14 have an end which can be inserted substantially snugly within a corresponding open end of the tubular body 2, reference notches or tabs being further provided.

The device 1 further comprises a tap 23, which is associated with the air supply duct 11 to open and close the air intake port 12.

The tap 23 is of the "open/close" type; i.e., it assumes two configurations: an open configuration, in which the air intake port 12 is connected to the outside environment, and a closure configuration, in which the air intake port 12 is isolated with respect to the outside environment.

The tap 23 could be replaced by any suitable air regulator elements or electrovalve.

In the open configuration, the air is aspirated into the mixing chamber 7 due to the partial vacuum created by the acceleration of the flow of steam in the converging portion 4 of the Venturi tube, so that the milk drawn into the mixing chamber 7, in addition to being heated by the steam, is also emulsified with the aspirated air and thus frothed, forming foam.

In the closed configuration, any inflow of air into the mixing chamber 7 is prevented, so that the milk drawn into the mixing chamber 7 is only heated by the steam and is not also frothed.

In the embodiment shown in the accompanying figures, the tap 23 comprises a cup-shaped element 24, which is coupled rotatably to the end of the air supply duct 11, where the intake port 12 is provided, a gasket 25 being interposed between the cup-shaped element 24 and the air supply duct 11.

Between the bottom of the cup-shaped element 24 and the end of the air supply duct 11 there is an interspace 26, while the wall of the cup-shaped element 24 is crossed by a through hole 27 which is perpendicular to the air supply duct 11.

A recess 28 is formed on the outer lateral surface of the air supply duct 11 and is connected to the interspace 26.

Conveniently, at the upper end of the cup-shaped element 24 an actuation handwheel 29 is provided, which is adapted to facilitate grip and handling by an operator.

The cup-shaped element 24 turns between the open configuration and the closed configuration.

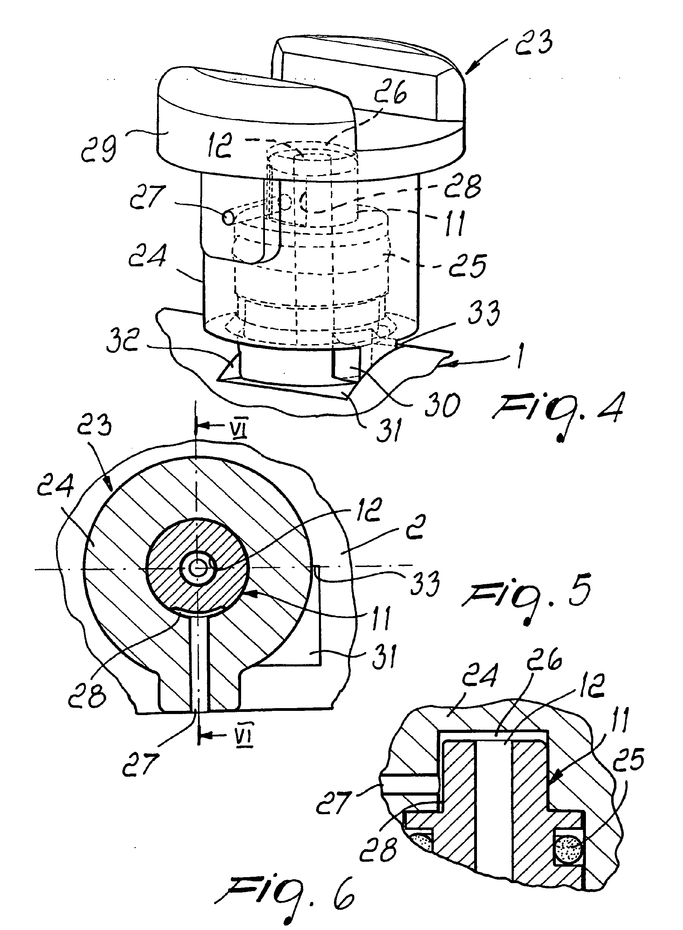

In the open configuration (Figures 4-6), the hole 27 engages the recess 28, so that the air can flow into the mixing chamber 7 along the path defined by the hole 27, by the interspace 26 and by the air supply duct 11.

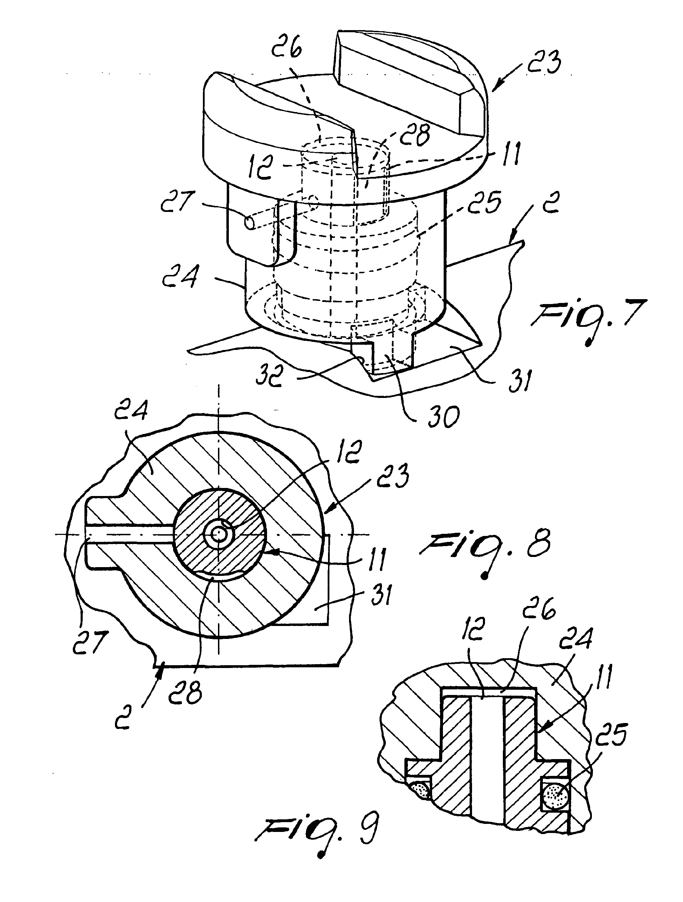

In the closed configuration (Figures 7-9), in which the cup-shaped element 24 is rotated through an angle of 90° with respect to the open configuration, the hole 27 is excluded from the recess 28, thus preventing the inflow of the air from outside to the intake port 12.

Means are also provided for stopping the rotation of the cup-shaped element 24 in the open configuration and in the closed configuration.

These stop means comprise at least one tooth 30 which protrudes from the cup-shaped element 24 and is accommodated so that it can slide within a groove 31 defined in the tubular body 2, an abutment surface 32 and 33 of the tooth 30 being defined at each of the two opposite ends of the groove 31 in order to stop the cup-shaped element 24 respectively in the closed configuration and in the open configuration.

Operation of the device according to the invention is as follows.

The device 1 is applied to any machine for making hot beverages which has a high-temperature steam source; this application is facilitated by the coupling or insertion means provided at the end of the nozzle 18.

The source of steam is connected to the intake end 3, while the milk supply duct 8 is connected, by means of a tube inserted therein, to a milk reservoir or container.

If one wishes to prepare warm milk without froth, the tap 23 is arranged in the closed configuration, in which the hole 27 does not engage the recess 28, preventing the inflow of air from the outside to the inside of the mixing chamber 7.

In this configuration, the flow of steam that passes through the Venturi tube undergoes, in passing through the converging portion 4, such an acceleration as to create a partial vacuum which is sufficient to draw the milk into the mixing chamber 7.

The milk thus aspirated combines with the steam and warms up, and after passing through the compaction chamber 15 is dispensed through the outflow channel 21 of the dispenser 14.

If one wishes to obtain frothed warm milk, i.e., with foam, it is sufficient to turn the tap 23 through 90° and move it to the open configuration, in which the hole 27 engages the recess 28, connecting the air supply duct 11 to the outside environment.

In this case, the partial vacuum generated by the acceleration that the flow of steam undergoes in passing through the converging portion 4 is such as to draw into the mixing chamber 7 not only the milk but also air.

The milk and the air mix with the steam, forming foam. The milk thus frothed and heated passes through the compaction chamber 15, where it compacts again, to be then dispensed through the outflow channel 21 of the dispenser 14.

It is noted that the operations for cleaning the device 1 are particularly simple and effective; it is in fact sufficient to draw water instead of milk through the supply duct 8 in order to obtain, due to the heat of the flow of steam, the complete removal of any residue of milk and of any particle of dirt.

Moreover, it is noted that no residues of milk accumulate on the outside of the device 1; the heating and frothing of the milk in fact occur inside the device 1.

In practice it has been found that the described invention achieves the proposed aim and objects.

The device according to the invention in fact allows to obtain warm and/or frothed milk at a degree and a level which are constant and independent of the sensibility and experience of the operator.

The device according to the invention is simple to use and does not require particular manual skill of the operator; it is in fact sufficient to turn the tap in one of the two positions to obtain either warm milk or warm and frothed milk.

Moreover, the device according to the invention is flexible and versatile in use; it can in fact be applied to any machine without particular constructive constraints and without requiring particular structural modifications, and it can also operate arranged in any orientation.

Finally, the device according to the invention ensures a high degree of hygiene and sterilization.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for heating and/or frothing milk for machines for preparing hot beverages such as cappuccino, comprising a tubular body (2) inside which there is a Venturi effect tube, which has an intake end (3) which can be associated with a source of steam and a discharge end (6), a mixing chamber, (7) which is defined between the converging portion (4) and the diverging portion (5) of said Venturi tube, and at least one milk supply duct (8), which has a drawing port (9) which can be associated with a milk reservoir and a port (10) for introducing the milk in said mixing chamber (7), the milk being drawn into said mixing chamber (7) due to the partial vacuum created by the flow of steam between said converging portion (4) and said diverging portion (5), **characterized in that** said mixing chamber (7) is defined by a cylindrical portion (7a), which is hollow and substantially coaxial to said Venturi effect tube, and by two surfaces (7b, 7c) which are substantially frustum-shaped and face the inside of said cylindrical portion and are arranged coaxially thereto and so that their respective smaller end faces are mutually juxtaposed and adjacent at a preset distance (D), said two frustum-shaped surfaces (7b, 7c) defiling two cone portions with the vertexes that face one another.

2. The device according to claim 1, **characterized in that** it comprises at least one duct (11) for supplying ambient air which has an intake port (12) connected to the outside environment and an input port (13) for introducing the air in said mixing chamber (7), the air being drawn into said mixing chamber due to the partial vacuum created by the flow of said steam between said converging portion (4) and said diverging portion (5).

3. The device according to claim 1 or 2, **characterized in that** it comprises a dispenser (14) of the milk that has been heated and/or frothed in said mixing chamber (7), which is associated with said tubular body (2) downstream, in the direction of the flow of said steam, of said discharge end (6) of the Venturi effect tube.

4. The device according to claim 3, **characterized in that** it comprises a chamber (15) for compacting the heated and/or frothed milk, which is defined between said diverging portion (5) and said dispenser (14).

5. The device according to claim 1, **characterized in that** said milk input port (10) is provided on the lateral surface of said cylindrical portion (7a).

6. The device according to claim 1 and according to one or more of claims 2 to 4, **characterized in that** said air input port (12) is provided on the lateral surface of said cylindrical portion (7a).

7. The device according to one or more of claims 2 to 6, **characterized in that** said milk input port (10) is offset backwardly with respect to said air input port (12) relative to the direction of flow of the steam.

8. The device according to one or more of claims 2 to 7, **characterized in that** said milk supply duct (8) and said air supply duct (11) are connected to said tubular body (2) and are arranged substantially at right angles to said Venturi effect tube.

9. The device according to one or more of the preceding claims, **characterized in that** said Venturi effect tube comprises a first tubular portion (16) which connects said converging portion (4) to said mixing chamber (7) and a second tubular portion (17) which connects said mixing chamber (7) to said diverging portion (5), said first tubular portion (16) and said second tubular portion (17) being substantially coaxial.

10. The device according to claim 9, **characterized in that** said first tubular portion (16) has an inside diameter which is smaller than the inside diameter of said second tubular portion (17).

11. The device according to claim 9 or 10, **characterized in that** said intake end (3), said converging portion (4) and said fust tubular portion (16) of the Venturi effect tube are defined in a nozzle (18) which has an end inserted detachably in said tubular body (2) and an opposite end which protrudes from said tubular body (2) and is provided with means for coupling to a machine for preparing hot beverages.

12. The device according to one or more of the preceding claims, **characterized in that** the end of said nozzle (18) that is inserted in said tubular body (2) is frustum-shaped so as to define one of said frustum-shaped surfaces (7b, 7c).

13. The device according to claim 12, **characterized in that** the other one of said frustum-shaped surfaces (7b, 7c) and said second tubular portion (17) and said diverging portion (5) of the Venturi effect tube arc provided in said tubular body (2).

14. The device according to one or more of claims 4 to 13, **characterized in that** said dispenser (14) is associated detachably with said tubular body (2) and comprises an internal cavity (20) which defines, in association with said tubular body (2), said compaction chamber (15) and is connected to a channel (21) for the outflow of the warm and/or frothed milk.

15. The device according to claim 14, **characterized in that** said dispenser (14) comprises at least one longitudinal fin (22) which passes through said outflow channel (21).

16. The device according to one or more of claims 2 to 15, **characterized in that** it comprises a tap (23) which is associated with said air supply duct (11) for opening and closing said air intake port (12).

17. The device according to claim 16, **characterized in that** said tap (23) comprises a cup-shaped element (24) which is coupled rotatably to the end of said air supply duct (11) where said intake port (12) is provided, between the bottom of said cup-shaped element (24) and said end of said air supply duct (11) there being an interspace (26), a through hole (27), which passes through the wall of said cup-shaped element (24), and a recess (28), which is defined on the outer lateral surface of said air supply duct (11) and is connected to said interspace (28), said cup-shaped element (24)being movable between an open configuration, in which said hole (27) affects said recess (28) for the inflow of the air from outside to said intake port (12) through said hole (27), said recess (28) and said interspace (26), and a closed configuration, in which said hole (27) is excluded from said recess (28), preventing the inflow of the air from outside to said intake port (12).

18. The device according to claim 17, **characterized in that** it comprises means (30) for stopping the rotation of said cup-shaped element (24) in said open configuration and in said closed configuration.

19. The device according to claim 18, **characterized in that** said stop means (30) comprise at least one tooth (30) which extends from said cup-shaped element (24) and is accommodated so that it can slide within a groove (31) efined in said tubular body (2), at each of the two opposite ends of said groove (31) there being a surface (32) for the abutment of said tooth (30) for stopping said cup-shaped element (24) respectively in said open configuration and in said closed configuration.

20. A machine for preparing hot beverages such as cappuccino or the like, comprising a source of steam with which a device (1) according to one or more of claims 1 to 19 is associated.

## Patentansprüche

1. Vorrichtung (1) zum Erhitzen und/oder Aufschäumen von Milch für Maschinen zum Zubereiten von Heißgetränken, wie Cappuccino, mit einem rohrförmigen Körper (2), in dem sich ein Venturieffektrohr befindet, welches ein Eintragende (3), das mit einer Dampfquelle verbunden werden kann, und ein Austragende (6), eine Mischkammer (7), die zwischen dem konvergierenden Abschnitt (4) und dem divergierenden Abschnitt (5) des Venturirohres vorgesehen ist, und zumindest eine Milchzufuhrleitung (8) aufweist, die mit einer Einsaugöffnung (9) versehen ist, welche mit einem Milchvorrat verbunden werden kann, sowie eine Öffnung (10) zum Einführen von Milch in die Mischkammer (7), wobei die Milch in die Mischkammer (7) infolge des Teilvakuums eingesaugt wird, das durch den Dampfstrom zwischen dem konvergierenden Abschnitt (4) und dem divergierenden Abschnitt (5) erzeugt wird, **dadurch gekennzeichnet, daß** die Mischkammer (7) durch einen zylindrischen Abschnitt (7a), der hohl und im wesentlichen koaxial zu dem Venturieffektrohr ist, und durch zwei Flächen (7b, 7c) gebildet ist, die im wesentlichen kegelstumpfförmig ausgebildet und der Innenseite des zylindrischen Abschnittes zugekehrt und koaxial zu diesem sind, derart, daß ihre entsprechenden kleineren Endflächen einander in einem vorbestimmten Abstand (D) benachbart gegenüberliegen, wobei die beiden kegelstumpfförmigen Flächen (7b, 7c) zwei Konusteile definieren, deren Scheitel einander zugekehrt sind.

2. Vorrichtung nach Anspruch 1, **dadurch gekennzeichnet, daß** sie zumindest eine Leitung (11) für die Zufuhr von Umgebungsluft aufweist, die eine Eintragöffnung (12), welche mit der Außenumgebung in Verbindung steht, und eine Eintragöffnung (13) zum Einführen der Luft in die Mischkammer (7) hat, wobei die Luft in die Mischkammer infolge des Teilvakuums eingesaugt wird, das durch den Dampfstrom zwischen dem konvergierenden Abschnitt (4) und dem divergierenden Abschnitt (5) erzeugt wird.

3. Vorrichtung nach Anspruch 1 oder 2, **dadurch gekennzeichnet, daß** sie eine Abgabeeinrichtung (14) für die in der Mischkammer (7) erhitzte und/oder aufgeschäumte Milch aufweist, die mit dem rohrförmigen Körper (2) in Richtung des Dampfstromes stromabwärts des Austragendes (6) des venturieffektrohres verbunden werden kann.

4. Vorrichtung nach Anspruch 3, **dadurch gekennzeichnet, daß** sie zwischen dem divergierenden Abschnitt (5) und der Abgabeeinrichtung (14) eine Kammer (15) aufweist, um die erhitzte und/oder aufgeschäumte Milch zu kompaktieren.

5. Vorrichtung nach Anspruch 1, **dadurch gekennzeichnet, daß** die Milcheintragöffnung (10) an der Seitenfläche des zylindrischen Abschnittes (7a) vorgesehen ist.

6. Vorrichtung nach Anspruch 1 und nach einem oder mehreren der Ansprüche 2 bis 4, **dadurch gekennzeichnet, daß** die Lufteintragöffnung (12) an der Seitenfläche des zylindrischen Abschnittes (7a) vorgesehen ist.

7. Vorrichtung nach einem oder mehreren der Ansprüche 2 bis 6, **dadurch gekennzeichnet, daß** die Milcheintragöffnung (10) bezüglich der Lufteintragöffnung (12) in Richtung des Dampfstromes nach hinten versetzt ist.

8. Vorrichtung nach einem oder mehreren der Ansprüche 2 bis 7, **dadurch gekennzeichnet, daß** die Milchzufuhrleitung (8) und die Luftzufuhrleitung (11) mit dem rohrförmigen Körper (2) verbunden und im wesentlichen in rechten Winkeln zu dem Venturieffektrohr angeordnet sind.

9. Vorrichtung nach einem oder mehreren der vorhergehenden Ansprüche, **dadurch gekennzeichnet, daß** das Venturieffektrohr einen ersten rohrförmigen Abschnitt (16) aufweist, welcher den konvergierenden Abschnitt (4) mit der Mischkammer (7) verbindet, und einen zweiten rohrförmigen Abschnitt (17), welcher die Mischkammer (7) mit dem divergierenden Abschnitt (5) verbindet, wobei der erste rohrförmige Abschnitt (16) und der zweite rohrförmige Abschnitt (17) im wesentlichen koaxial sind.

10. Vorrichtung nach Anspruch 9, **dadurch gekennzeichnet, daß** der erste rohrförmige Abschnitt (16) einen Innendurchmesser aufweist, der kleiner als der Innendurchmesser des zweiten rohrförmigen Abschnittes (17) ist.

11. Vorrichtung nach Anspruch 9 oder 10, **dadurch gekennzeichnet, daß** das Eintragende (3) des konvergierenden Abschnittes (4) und der erste rohrförmige Abschnitt (16) des Venturieffektrohres in einer Düse (18) definiert sind, die ein in den rohrförmigen Körper (2) lösbar eingesetztes Ende und ein gegenüberliegendes Ende aufweist, welches aus dem rohrförmigen Körper (2) herausragt und mit Mitteln zum Kuppeln an eine Maschine zum Zubereiten von Heißgetränken ausgestattet ist.

12. Vorrichtung nach einem oder mehreren der vorhergehenden Ansprüche, **dadurch gekennzeichnet, daß** das Ende der Düse (18), welches in den rohrförmigen Körper (2) eingesetzt ist, kegelstumpfförmig ist, um eine der kegelstumpfförmigen Flächen (7b, 7c) zu bilden.

13. Vorrichtung nach Anspruch 12, **dadurch gekennzeichnet, daß** die andere der kegelstumpfförmigen Flächen (7b, 7c) und der zweite rohrförmige Abschnitt (17) sowie der divergierende Abschnitt (5) des Venturieffektrohres in dem rohrförmigen Körper (2) vorgesehen sind.

14. Vorrichtung nach einem oder mehreren der Ansprüche 4 bis 13, **dadurch gekennzeichnet, daß** die Abgabeeinrichtung (14) mit dem rohrförmigen Körper (2) lösbar verbunden ist und einen Innenhohlraum (20) aufweist, der gemeinsam mit dem rohrförmigen Körper (2) die Kompaktierkammer (15) bildet und mit einem Kanal (21) zum Ausströmen der warmen und/ oder aufgeschäumten Milch verbunden ist.

15. Vorrichtung nach Anspruch 14, **dadurch gekennzeichnet, daß** die Abgabeeinrichtung (14) zumindest einen Längssteg (22) aufweist, der sich durch den Ausströmkanal (21) erstreckt.

16. Vorrichtung nach einem oder mehreren der Ansprüche 2 bis 15, **dadurch gekennzeichnet, daß** sie einen Hahn (23) aufweist, der mit der Luftzufuhrleitung (11) verbunden ist, um die Eintragöffnung (12) zu öffnen und zu schließen.

17. Vorrichtung nach Anspruch 16, **dadurch gekennzeichnet, daß** der Hahn (23) ein becherförmiges Element (24) aufweist, welches mit dem Ende der Luftzufuhrleitung (11), an welcher die Eintragöffnung (12) vorgesehen ist, drehbar gekuppelt ist, wobei zwischen dem Boden des becherförmigen Elementes (24) und dem Ende der Luftzufuhrleitung (11) ein Zwischenraum (26) vorhanden ist, wobei ein Durchtrittsloch (27), welches sich durch die Wand des becherförmigen Elementes (24) erstreckt, und eine Ausnehmung (28) vorgesehen sind, welche an einer äußeren Seitenfläche der Luftzufuhrleitung (11) ausgebildet und mit dem Zwischenraum (26) verbunden ist, wobei das becherförmige Element (24) zwischen einer Offenstellung, in welcher das Loch (27) mit der Ausnehmung (28) zum Einströmen der Luft von der Außenseite der Lufteintragöffnung (12) durch das Loch (27) in Verbindung steht, wobei die Ausnehmung (28) und der Zwischenraum (26) durchströmt werden, und einer Schließstellung bewegbar ist, in welcher das Loch (27) von der Ausnehmung (28) abgeschlossen ist, wodurch ein Einströmen von Luft von der Außenseite zur Lufteintragöffnung (12) verhindert wird.

18. Vorrichtung nach Anspruch 17, **dadurch gekennzeichnet, daß** sie Mittel (30) aufweist, um die Drehung des becherförmigen Elementes (24) in der Offenstellung und in der Schließstellung zu stoppen.

19. Vorrichtung nach Anspruch 18, **dadurch gekennzeichnet, daß** die Stoppmittel (30) zumindest einen Zahn (30) aufweisen, der sich von dem becherförmigen Element (24) wegerstreckt und so ausgebildet ist, daß er innerhalb einer Nut (31) gleiten kann, die in dem rohrförmigen Körper (2) definiert ist, wobei an jedem der gegenüberliegenden Enden der Nut (31) eine Oberfläche (32) für den Anschlag des Zahnes (30) zum Stoppen des becherförmigen Elementes (24) in der Offenstellung bzw. in der Schließstellung vorgesehen ist.

20. Maschine zum Zubereiten von Heißgetränken, wie Cappuccino od.dgl., mit einer Dampfquelle, der eine Vorrichtung (1) gemäß einem oder mehreren der Ansprüche 1 bis 19 zugeordnet ist.

## Revendications

1. Dispositif (1) pour faire chauffer et/ou faire mousser du lait pour des machines de préparation de boissons chaudes, telles que les cappuccinos, comprenant un corps tubulaire (2) à l'intérieur duquel on trouve un tube de Venturi, qui a une extrémité d'admission (3) qui peut être associée à une source de vapeur et une extrémité de décharge (6), une chambre de mélange (7) qui est définie entre la partie convergente (4) et la partie divergente (5) dudit tube de Venturi, et au moins un conduit d'alimentation en lait (8), qui a un orifice d'aspiration (9) qui peut être associé à un réservoir de lait et un orifice (10) pour introduire le lait dans ladite chambre de mélange (7), le lait étant aspiré dans ladite chambre de mélange (7) en raison du vide partiel créé par l'écoulement de vapeur entre ladite partie convergente (4) et ladite partie divergente (5), **caractérisé en ce que** ladite chambre de mélange (7) est définie par une partie cylindrique (7a) qui est creuse et sensiblement coaxiale par rapport audit tube de Venturi, et par deux surfaces (7b, 7c) qui sont sensiblement de forme tronconique et font face à l'intérieur de ladite partie cylindrique et sont agencées de manière coaxiale à cette dernière et de sorte que leurs faces d'extrémité plus petites respectives sont mutuellement juxtaposées et adjacentes à une distance prédéterminée (D), lesdites deux surfaces tronconiques (7b, 7c) définissant deux parties de cône dont les sommets se font face.

2. Dispositif selon la revendication 1, **caractérisé en ce qu'**il comprend au moins un conduit (11) pour fournir l'air ambiant qui a un orifice d'admission (12) raccordé à l'environnement extérieur et un orifice d'entrée (13) pour introduire l'air dans ladite chambre de mélange (7), l'air étant aspiré dans ladite chambre de mélange en raison du vide partiel créé par l'écoulement de ladite vapeur entre ladite partie convergente (4) et ladite partie divergente (5).

3. Dispositif selon la revendication 1 ou 2, **caractérisé en ce qu'**il comprend un distributeur (14) du lait qui a été chauffé et/ou que l'on a fait mousser dans ladite chambre de mélange (7), qui est associé audit corps tubulaire (2) en aval, dans la direction de l'écoulement de ladite vapeur, de ladite extrémité de décharge (6) du tube de Venturi.

4. Dispositif selon la revendication 3, **caractérisé en ce qu'**il comprend une chambre (15) pour compacter le lait chauffé et/ou que l'on a fait mousser, qui est définie entre ladite partie divergente (5) et ledit distributeur (14).

5. Dispositif selon la revendication 1, **caractérisé en ce que** ledit orifice d'entrée de lait (10) est prévu sur la surface latérale de ladite partie cylindrique (7a).

6. Dispositif selon la revendication 1 et selon une ou plusieurs des revendications 2 à 4, **caractérisé en ce que** ledit orifice d'entrée d'air (12) est prévu sur la surface latérale de ladite partie cylindrique (7a).

7. Dispositif selon une ou plusieurs des revendications 2 à 6, **caractérisé en ce que** ledit orifice d'entrée de lait (10) est décalé vers l'arrière par rapport audit orifice d'entrée d'air (12) par rapport à la direction d'écoulement de la vapeur.

8. Dispositif selon une ou plusieurs des revendications 2 à 7, **caractérisé en ce que** ledit conduit d'alimentation en lait (8) et ledit conduit d'alimentation en air (11) sont raccordés audit corps tubulaire (2) et sont agencés sensiblement en angle droit par rapport audit tube de Venturi.

9. Dispositif selon une ou plusieurs des revendications précédentes, **caractérisé en ce que** ledit tube de Venturi comprend une première partie tubulaire (16) qui raccorde ladite partie convergente (4) à ladite chambre de mélange (7) et une seconde partie tubulaire (17) qui raccorde ladite chambre de mélange (7) à ladite partie divergente (5), ladite première partie tubulaire (16) et ladite seconde partie tubulaire (17) étant sensiblement coaxiales.

10. Dispositif selon la revendication 9, **caractérisé en ce que** ladite première partie tubulaire (16) a un diamètre interne qui est inférieur au diamètre interne de ladite seconde partie tubulaire (17).

11. Dispositif selon la revendication 9 ou 10, **caractérisé en ce que** ladite extrémité d'admission (3), ladite partie convergente (4) et ladite première partie tubulaire (16) du tube de Venturi sont définies dans une buse (18) qui a une extrémité insérée de manière détachable dans ledit corps tubulaire (2) et une extrémité opposée qui fait saillie à partir dudit corps tubulaire (2) et est prévue avec des moyens pour se coupler à une machine de préparation de boissons chaudes.

12. Dispositif selon une ou plusieurs des revendications précédentes, **caractérisé en ce que** l'extrémité de ladite buse (18) qui est insérée dans ledit corps tubulaire (2) est de forme tronconique afin de définir l'une desdites surfaces de forme tronconique (7b, 7c).

13. Dispositif selon la revendication 12, **caractérisé en ce que** l'autre desdites surfaces tronconiques (7b, 7c) et ladite seconde partie tubulaire (17) et ladite partie convergente (5) du tube de Venturi sont prévues dans ledit corps tubulaire (2).

14. Dispositif selon une ou plusieurs des revendications 4 à 13, **caractérisé en ce que** ledit distributeur (14) est associé de manière détachable audit corps tubulaire (2) et comprend une cavité interne (20) qui définit, en association avec ledit corps tubulaire (2), ladite chambre de compactage (15) et est raccordé à un canal (21) pour la sortie du lait chaud et/ou que l'on a fait mousser.

15. Dispositif selon la revendication 14, **caractérisé en ce que** ledit distributeur (14) comprend au moins une ailette longitudinale (22) qui passe à travers ledit canal de sortie (21).

16. Dispositif selon une ou plusieurs des revendications 2 à 15, **caractérisé en ce qu'**il comprend un robinet (23) qui est associé audit conduit d'alimentation en air (11) pour ouvrir et fermer ledit orifice d'entrée d'air (12).

17. Dispositif selon la revendication 16, **caractérisé en ce que** ledit robinet (23) comprend un élément en forme de coupelle (24) qui est couplé en rotation à l'extrémité dudit conduit d'alimentation en air (11) où ledit orifice d'entrée (12) est prévu, entre le fond dudit élément en forme de coupelle (24) et ladite extrémité dudit conduit d'alimentation en air (11), on trouve un espace intermédiaire (26), un trou de passage (27) qui passe à travers la paroi dudit élément en forme de coupelle (24), et un évidement (28) qui est défini sur la surface latérale externe dudit conduit d'alimentation en air (11) et est raccordé audit espace intermédiaire (28), ledit élément en forme de coupelle (24) étant mobile entre une configuration ouverte dans laquelle ledit trou (27) affecte ledit évidement (28) pour l'entrée de l'air provenant de l'extérieur dans l'orifice d'entrée (12) par ledit trou (27), ledit évidement (28) et ledit espace intermédiaire (26), et une configuration fermée, dans laquelle ledit trou (27) est exclu de l'évidement (28), empêchant l'entrée de l'air provenant de l'extérieur dans ledit orifice d'entrée (12).

18. Dispositif selon la revendication 17, **caractérisé en ce qu'**il comprend des moyens (30) pour arrêter la rotation dudit élément en forme de coupelle (24) dans ladite configuration ouverte et dans ladite configuration fermée.

19. Dispositif selon la revendication 18, **caractérisé en ce que** lesdits moyens d'arrêt (30) comprennent au moins une dent (30) qui s'étend à partir dudit élément en forme de coupelle (24) et est logée de sorte qu'il peut coulisser à l'intérieur d'une rainure (31) définie dans ledit corps tubulaire (2), au niveau de chacune des deux extrémités opposées de ladite rainure (31), on trouve une surface (32) pour la butée de ladite dent (30) afin d'arrêter ledit élément en forme de coupelle (24) respectivement dans ladite configuration ouverte et dans ladite configuration fermée.

20. Machine pour préparer des boissons chaudes telles qu'un cappuccino ou similaire, comprenant une source de vapeur avec laquelle un dispositif (1) selon une ou plusieurs des revendications 1 à 19, est associé.
